(19) Europäisches Patentamt
European Patent Office
Office européen des brevets

(11) **EP 1 222 454 B1**

(12) **EUROPÄISCHE PATENTSCHRIFT**

(45) Veröffentlichungstag und Bekanntmachung des Hinweises auf die Patenterteilung:
**27.08.2008 Patentblatt 2008/35**

(21) Anmeldenummer: **00975816.0**

(22) Anmeldetag: **09.10.2000**

(51) Int Cl.:
***G01N 27/18*** *(2006.01)* ***G01N 25/18*** *(2006.01)*

(86) Internationale Anmeldenummer:
**PCT/DE2000/003457**

(87) Internationale Veröffentlichungsnummer:
**WO 2001/027604 (19.04.2001 Gazette 2001/16)**

(54) **VERFAHREN UND EINRICHTUNG ZUR BESTIMMUNG DER GASKONZENTRATIONEN IN EINEM GASGEMISCH**

METHOD AND DEVICE FOR DETERMINING GAS CONCENTRATION IN A GAS MIXTURE

PROCEDE ET DISPOSITIF POUR DETERMINER LA CONCENTRATION DE GAZ D'UN MELANGE GAZEUX

(84) Benannte Vertragsstaaten:
**DE FR GB IT**

(30) Priorität: **13.10.1999 DE 19949327**

(43) Veröffentlichungstag der Anmeldung:
**17.07.2002 Patentblatt 2002/29**

(73) Patentinhaber: **Grunewald, Axel-Ulrich**
**60431 Frankfurt am Main (DE)**

(72) Erfinder: **Grunewald, Axel-Ulrich**
**60431 Frankfurt am Main (DE)**

(74) Vertreter: **Haar, Lucas Heinz Jörn**
**Patentanwälte Haar & Schwarz-Haar**
**Lessingstrasse 3**
**61231 Bad Nauheim (DE)**

(56) Entgegenhaltungen:
DE-A- 19 535 819  DE-A- 19 808 681
DE-C- 3 711 511  US-A- 4 164 862
US-A- 5 515 714

**EP 1 222 454 B1**

Printed by Jouve, 75001 PARIS (FR)

**Beschreibung**

Die Erfindung betrifft ein Verfahren sowie eine Einrichtung zur Bestimmung der Gaskonzentrationen in einem Gasgemisch gemäß dem Oberbegriff des Verfahrens- bzw. Vorrichtungsanspruches.

Die Wärmeleitfähigkeit definiert allgemein den Zusammenhang den durch eine Temperaturdifferenz bedingten Wärmestrom bei gegebener Temperaturdifferenz zwischen einer Wärmequelle und einer Wärmesenke. Die Wärmeleitfähigkeit wird dazu spezifisch auf die vom Wärmestrom durchströmte Fläche sowie den Abstand zwischen Wärmequelle und Wärmesenke angegeben. Der Wärmeleitfähigkeitskoeffizient hängt bei Gasen in komplexer Weise von der Temperatur (Temperaturniveau), dem Molekulargewicht des Gases sowie dem Freiheitsgrad der Gasmoleküle ab. Bei der kinetischen Deutung des Wärmeleitfähigkeitskoeffizienten von Gasen geht ferner auch der Radius (mittlerer Radius) der Moleküle ein. Generell gilt, dass die Wärmeleitfähigkeit von Gasen mit steigender Temperatur zunimmt und mit wachsender Molekülmasse abnimmt.

Die oben kurz skizzierte Abhängigkeit der Wärmeleitfähigkeit von den Molekülparametern wird zur Bestimmung von Gaskonzentrationen in einem Gasgemisch ausgenutzt. Aus der DE 37 11 511 C1 ist ein Verfahren zur Bestimmung der Gaskonzentrationen in einem Gasgemisch und ein Sensor zur Messung der Wärmeleitfähigkeit eines Gasgemisches bekannt. Ganz allgemein wird bei diesem Verfahren der Unterschied in der Wärmeleitfähigkeit verschiedener Gase ausgenutzt. Der bei diesem Verfahren zum Einsatz kommende Analysator besteht aus einer vom Gasgemisch durchströmbaren Wärmequelle und einer Wärmesenke. Ein als Wärmequelle dienendes Widerstandheizelement wird mittels Stromdurchfluss auf eine gegenüber seiner Umgebung erhöhte Temperatur gebracht. Über eine durch die Geometrie festgelegte Wärmeleitstrecke wird vom Gasgemisch Wärme von der Wärmequelle zu einer auf konstanter Temperatur gehaltenen Wärmesenke geleitet. Durch den Wärmetransport von der Wärmequelle zur Wärmesenke wird der Wärmequelle Energie entzogen, die ein Maß für die Wärmeleitfähigkeit des Gasgemisches ist und die sich mit geeigneten Verfahren messen läßt.

Wie bereits erwähnt ist die Wärmeleitfähigkeit eines Gases temperaturabhängig. Um Einflüsse des Temperaturkoeffizienten der Wärmeleitung auszuschalten wird die Messzelle thermostatisiert, d.h. durch eine elektronische Regelung auf konstanter Temperatur gehalten. Außer von der Temperatur der Messzelle wird die mittlere Gastemperatur in der Wärmeleitstrecke von der Temperatur der Wärmequelle bestimmt. Deshalb wird auch diese konstant gehalten bzw. reproduzierbar eingestellt.

Besteht das Gasgemisch aus lediglich zwei Komponenten, so genügt eine Wärmeleitfähigkeitsmessung bei einem Temperaturniveau. Als Temperaturniveau sei hier der mittlere Temperaturwert zwischen Wärmequelle und Wärmesenke angenommen. Per Definition kann als Temperaturniveau auch der Wert der Wärmequelle bzw. der Wärmesenke angegeben werden.

Besteht das Gasgemisch aus mehr als zwei Komponenten, d.h. sollen die Konzentrationen (Verhältnis der Partialdrücke) von mehr als zwei verschiedenen Gasen bestimmt werden, so müssen gemäß dem aus der oben genannten Schrift bekannten Verfahren die Wärmeleitfähigkeiten bei mehreren stationären Temperaturen (Temperaturniveaus) bestimmt werden. Allgemein gesprochen bedeutet dies, dass zur Bestimmung der Gaskonzentrationen bei einem aus N (>2) Gaskomponenten bestehenden Gemisch die Wärmeleitfähigkeit des Gasgemisches bei mindestens N-1 Gastemperaturen zu bestimmen ist, um dann aus den ermittelten Wärmeleitfähigkeits-Messwerten mit bekannten mathematischen Methoden zur Lösung nichtlinearer Gleichungssysteme die einzelnen Gaskonzentrationen zu berechnen. Eine Abwandlung dieses bekannten Verfahrens schlägt vor, dass zur Erkennung des Auftretens unbekannter Gaskomponenten die Wärmeleitfähigkeit des Gasgemisches bei mindestens N Gastemperaturen gemessen wird.

Der bei diesem bekannten Verfahren einsetzbare Sensor zur Messung der Wärmeleitfähigkeit des durchströmten Gasgemisches besteht aus einer einige 100 Mikrometer starken Trägerplatte aus Silicium. Auf diese Trägerplatte ist eine Isolatorschicht aufgetragen, auf der durch Aufdampfen oder Sputtern mäanderförmige Dünnfilmwiderstände aufgebracht sind. Im Bereich der Dünnfilmwiderstände ist die Isolatorschicht unterätzt, so dass eine Grube in der Trägerplatte entsteht, die den unteren Teil der Messkammer des Sensors bildet. Auf der Trägerplatte mit den Dünnfilmwiderständen ruht eine Deckplatte aus Silicium, in die in Höhe der Dünnfilmwiderstände eine Grube eingeätzt ist, die den oberen Teil der Messkammer bildet. Die Deckplatte besitzt eine Öffnung; die als Diffusionskanal dem Gasgemisch den Zutritt zur Messkammer ermöglicht.

Die Durchführung des bekannten Verfahrens mit dem Sensor bedingt, dass zur Bestimmung mehrkomponentiger Gasgemische Wärmeleitfähigkeitsmessungen bei entsprechend vielen stationären Temperaturniveaus durchgeführt werden. Das Sensorelement ist jedesmal auf einen vorgegebenen Temperaturwert aufzuheizen und dann die entsprechende Wärmeleitfähigkeitsmessung durchzuführen. Um die Heizzeiten zu minimieren, muss der Sensor eine geringe Masse aufweisen, so dass die dadurch resultierende thermische Zeitkonstante möglichst gering ist. Alternativ dazu können die Wärmeleitfähigkeitsmessungen auch mittels einer entsprechenden Anzahl von Sensoren, die parallel auf die verschiedenen Temperaturniveaus verbracht werden, durchgeführt werden. Gerade die zweite Ausführungsvariante des vorbekannten Verfahrens bedingt erhöhten Bauteilaufwand. Das nacheinander ausgeführte Aufheizen eines Sensorelementes auf unterschiedliche Temperaturniveaus muss zur Minimierung äußerer Störfaktoren sehr exakt durchgeführt werden, so dass dies erhöhten Aufwand zur Abschirmung äußerer Störfaktoren bedingt.

Aufgabe der vorliegenden Erfindung ist es daher, ein Verfahren sowie eine Einrichtung zur Bestimmung von Gaskonzentrationen in einem Gasgemisch gemäß dem Oberbegriff des Verfahrens- bzw. Vorrichtungsanspruches dahingehend zu erweitern, so dass die Messgenauigkeit erhöht, die Einflüsse gegen äußere Störungen vermindert und der Bauaufwand der Messeinrichtungen reduziert werden kann.

Gelöst wird diese Aufgabe durch die kennzeichnenden Merkmale des Verfahrens- bzw. Vorrichtungsanspruches. Weiterbildungen der Erfindung ergeben sich aus den jeweiligen Unteransprüchen.

Gemäß der Erfindung ist vorgesehen, dass die Wärmeleitfähigkeit des Gasgemisches kontinuierlich bei einem sich periodisch zwischen einem minimalen und einem maximalen Temperaturwert ändernden Temperaturniveau bestimmt wird. Dies bedeutet, dass der bei der Bestimmung der Wärmeleitfähigkeit verwendete Sensor durch einen Temperiergenerator periodisch alternierend zwischen dem minimalen und maximalen Wert des Temperaturniveaus beheizt wird. Die Temperaturdifferenz zwischen Wärmequelle und Wärmesenke des Sensor kann dabei stets gleichbleibend sein - wesentlich ist, dass der mittlere Temperaturwert zwischen Quelle und Senke periodisch zwischen dem minimalen und maximalen Wert wechselt, also mit einer vorgegebenen Amplitude um einen mittleren Übertemperaturwert schwankt.

Gemäß einer bevorzugten Ausführungsform der Erfindung ist vorgesehen, dass die Bestimmung der Wärmeleitfähigkeit des Gasgemisches nach einer als harmonische Funktion (Sinusfunktion) zwischen minimalem und maximalem Temperaturwert ausgebildeten Temperatur-Zeitfunktion bestimmt wird. Zur Durchführung des Verfahrens kann ein Sensor bekannter Art verwendet werden, insbesondere ein Sensor wie in der DE 37 11 511 C1 beschrieben.

Ein Ausgangssignal des Sensors ist ein Maß für die Wärmeleitfähigkeit des periodisch und insbesondere nach einer harmonischen Temperatur-Zeitfunktion beheizten Sensorelementes. Aufgrund der komplexen Zusammenhänge zwischen Wärmeleitfähigkeit und Molekülmasse, Molekülgröße sowie mittlerer Temperatur (Temperaturniveau) wird das die Wärmleitfähigkeit des Gasgemisches wiedergebende Sensorsignal bei einem Gasgemisch mit N>2 Komponenten zwar periodisch verlaufen aber ein zum Temperaturprofil verzerrtes Zeitverhalten aufweisen. Aus dem Zeitverlauf des Sensorsignales bzw. den Werten der Wärmeleitfähigkeit bei gegebenem Temperatur-Zeitverlauf lassen sich so die Konzentrationen der Gaskomponenten (das Verhältnis der Partialdrücke zueinander) bestimmen.

Gemäß einer bevorzugten Ausführungsform der Erfindung wird der Sensor zur Bestimmung der Wärmeleitfähigkeit mit einem harmonischen (sinusförmigen) Temperatur-Zeitverhalten beaufschlagt und das die Wärmeleitfähigkeit des Gasgemisches wiedergebende Sensorsignal einer harmonischen Analyse (Entwicklung in eine Reihe nach trigonometrischen Funktionen = Fourier-Reihe) unterzogen. Da die Wärmeleitfähigkeit bei einem harmonischen (sinusförmigen) Temperaturverlauf bestimmt wird, besteht das die Wärmeleitfähigkeit des Gasgemisches wiedergegebene Sensorsignal aus einer Summe von harmonischen Zeitfunktionen, deren Frequenzen / Perioden ein ganzzahliges vielfaches der Grundfrequenz / Periode der der Beaufschlagung des Sensorelementes dienenden Temperatur-Zeitfunktion sind. Die einzelnen Koeffizienten (Amplituden), mit der die harmonischen Anteile (das Spektrum) zu wichten sind, um in der Summe das Sensorsignal zu ergeben, bilden daher ein Maß für die Konzentrationen (Verhältnis der Partialdrucke) der einzelnen Komponenten des Gasgemisches.

Des weiteren erfolgt die Erläuterung eines Ausführungsbeispiels der Erfindung anhand der Zeichnungen. Es zeigt:

Fig. 1    einen prinzipiellen Aufbau zur Durchführung des erfindungsgemäßen Verfahrens und

Fig. 2    die Temperatur-Zeitfunktion der Temperaturbeaufschlagung des Sensorelementes, den Zeitverlauf des die Leitfähigkeit des Gasgemisches wiedergebenden Sensorsignales und die einzelnen Fourier-Koeffizienten des die Leitfähigkeit wiedergebenden Sensorsignals.

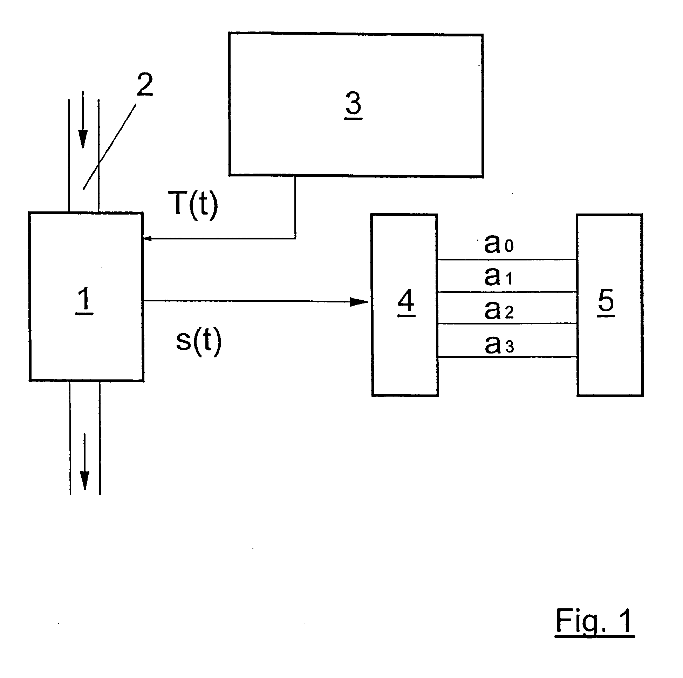

Ein an sich bekannt aufgebautes Sensorelement 1 zur Bestimmung der Wärmleitfähigkeit s eines durch das Sensorelement 1 hindurch geleiteten Gasstromes 2 steht in Wirkverbindung mit einem Temperiergenerator 3 (Figur 1). Durch den Temperiergenerator 3 kann das Sensorelement 1 mit einem vorgegebenen periodischen und insbesondere einem harmonischen Zeitverlauf entsprechenden Temperaturprofil beaufschlagt werden. Somit erfolgt durch das Sensorelement 1 eine Bestimmung der Wärmeleitfähigkeit des Gasstromes 2 bei verschiedenen Temperaturen/Temperaturniveaus $T(t)$.

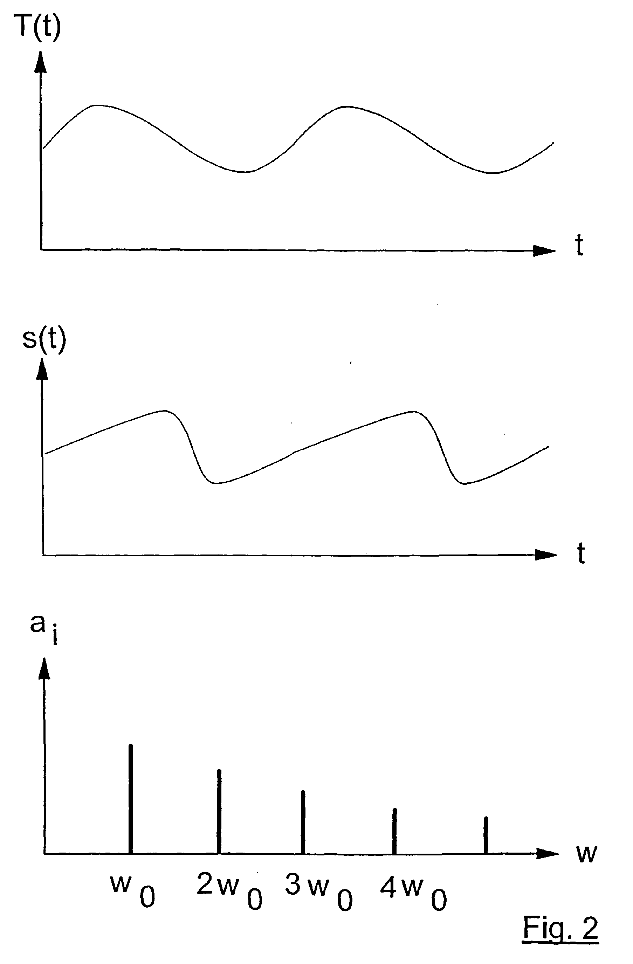

Figur 2 zeigt einen harmonischen Temperatur-Zeitverlauf $T(t)$ zur Beaufschlagung des Sensorelementes 1. Die Periode des Temperatur-Zeitverlaufes dieser harmonischen Funktion $T(t)$ beträgt $T = 2\pi/w_0$.

Das die Wärmeleitfähigkeit des durch das Sensorelement 1 hindurch geleiteten Gasstromes 2 wiedergebende Signal $s(t)$ wird einem Fourier-Analysator 4 zugeleitet, durch den die Fourier-Koeffizienten $a_0, a_1, a_2, a_3, \ldots$ bestimmbar sind. Da das Sensorelement 1 mit einem harmonischen Temperatur-Zeitprofil $T(t)$ beaufschlagt wird, ist das die Wärmeleitfähigkeit des durch das Sensorelement 1 hindurch geleiteten Gasstromes 2 wiedergebende Signal $s(t)$ darstellbar als:

$$s(t) = a_0/2 + \sum_{i=1}^{\infty} a_i \cdot \sin(i \cdot w_0 \cdot t + \alpha_i).$$

Gemäß dem oben dargestellten Ansatz wird also das die Wärmeleitfähigkeit des Gasstromes 2 repräsentierende Signal $s(t)$ dargestellt als eine mit unterschiedlichen Amplitudenfaktoren $a_i$ gewichtete Summe von harmonischen Schwingungen der ganzzahligen vielfachen Frequenzen $i \cdot wo$. Die im oben dargestellten Summenansatz verwendete Größe $\alpha_i$ stellt einen Phasenfaktor dar.

Setzt man:

$$a_i = \sqrt{(A_i^2 + B_i^2)} \qquad und \qquad \tan \alpha_i = A_i / B_i$$

so gilt:

$$A_i = 2/T \cdot \int_{-T/2}^{+T/2} s(t) \cdot \cos(i \cdot w_0 \cdot t)\, dt$$

und

$$B_i = 2/T \cdot \int_{-T/2}^{+T/2} s(t) \cdot \sin(i \cdot w_0 \cdot t)\, dt$$

$i = 0, 1, 2, 3, \ldots$

Der bei einem Temperatur-Zeitverlauf $T(t)$ sich ergebende Signalverlauf $s(t)$ ist in Figur 2 prinzipiell dargestellt. Weiterhin zeigt Figur 2 in einem dritten Diagramm die den einzelnen Frequenzen $i \cdot wo$ zuordenbaren und durch den oben dargestellten Summenansatz ermittelbaren Koeffizienten $a_i$.

Durch die erfindungsgemäße Fouriertransformation des die Wärmeleitfähigkeit des Gasgemischen wiedergebenden Sensorsignales $s(t)$ werden einzelne Faktoren (Fourierkoeffizienten) erhalten, welche zur Bestimmung der Konzentration der Komponenten des Gasgemisches dienen. Zur Identifikation einzelner Gastypen sowie der Konzentrationsanteile ist es möglich in einer dem Fourieranalysator 4 nachgeschalteten Auswerteeinheit 5 Werte abzuspeichern, mit denen die durch die Fouriertransformation eines gegebenen Signals $s(t)$ erhaltenen Fourierkoeffizienten $a_i$ vergleichbar sind.

Die Fourierkoeffizienten $a_i$ werden beim erfindungsgemäßen Verfahren bis zu einer vorgegebenen Ordnung $n$ entwickelt. Die Ordnung ist dabei so gewählt, dass die Koeffizienten mit $i>n$ in der Größe vernachlässigbar sind, also keinen wesentlichen Beitrag mehr in der Darstellung von $s(t)$ leisten.

Bezugszeichenliste

1        Sensorelement
2        Gasstrom (Gasgemisch)

| 3 | Temperiergenerator |
|---|---|
| 4 | Fourieranalysator |
| 5 | Auswerteeinheit |
| T(t) | Temperatur-Zeitfunktion (Temperiergenerator 3) |
| s(t), s | Signal Sensorelement 1 (Wärmeleitfähigkeit) |
| $a_i$ | Fourierkoeffizient |

**Patentansprüche**

1. Verfahren zur Bestimmung der Gaskonzentrationen in einem Gasgemisch mit mehr als einer Komponente, bei welchem Wärmeleitfähigkeiten des Gasgemisches bei verschiedenen Temperaturen ermittelt und daraus die einzelnen Gaskonzentrationen bestimmt werden,
**dadurch gekennzeichnet,**
**dass** die Wärmeleitfähigkeiten bei einer periodisch zwischen einem minimalen und einem maximalen Temperaturwert verlaufenen Temperatur-Zeitfunktion (T(t)) bestimmt und die bei dem Temperatur-Zeitverlauf (T(t)) erhaltenen Wärmeleitfähigkeiten (s(t)) als Funktion der Zeit (t) kontinuierlich ermittelt werden,
und **dass** die Zeitfunktion der Wärmeleitfähigkeit (s(t)) einer Fourieranalyse unterzogen und aus den Koeffizienten ($a_i$) dieser Fourieranalyse die Konzentrationen der Gaskomponenten bestimmt werden.

2. Verfahren nach Anspruch 1,
**dadurch gekennzeichnet,**
**dass** die Wärmeleitfähigkeit (s(t)) bei einem harmonischen Temperatur-Zeitverlauf (T(t)) bestimmt wird.

3. Verfahren nach Anspruch 1 oder 2,
**dadurch gekennzeichnet,**
**dass** ein die Wärmeleitfähigkeit (s(t)) des Gasgemisches wiedergebendes Signal der Fourieranalyse unterworfen wird.

4. Verfahren nach einem der vorhergehenden Ansprüche,
**dadurch gekennzeichnet,**
**dass** die durch die Fourieranalyse erhaltenen Koeffizienten ($a_i$) des zu bestimmenden Gasgemjsches mit bei Kallibriermessungen erhaltenen Werten verglichen werden.

5. Einrichtung zur Durchführung des Verfahrens nach Anspruch 1, mit einem Sensorelement zur Bestimmung der Wärmeleitfähigkeit eines durchleitbaren Gasgemisches und einer Einrichtung zur Beaufschlagung des Sensorelmentes mit vorgegebenen Temperaturwerten,
**dadurch gekennzeichnet,**
**dass** die Einrichtung zur Beaufschlagung des Sensorelementes (1) mit vorgegebenen Temperaturwerten ein Temperiergenerator (3) ist, durch welchen das Sensorelement (1) kontinuierlich mit einer periodischen Temperatur-Zeitfunktion (T(t)) beaufschlagbar ist, und dass dem Sensorelement (1) ein Fourieranalysator (4) nachgerodnet ist, dem ein die Wärmeleitfähigkeit des hindurch geleiteten Gasgemisches (2) wiedergebendes Sensorsignal (s(t)) zuführbar ist.

6. Einrichtung nach Anspruch 5,
**dadurch gekennzeichnet,**
**dass** durch den Temperiergenerator (3) das Sensorelement (1) mit einer harmonischen Temperatur-Zeitfunktion T(t) beaufschlagbar ist.

7. Einrichtung nach Anspruch 5 oder 6,
**dadurch gekennzeichnet,**
**dass** dem Fourieranalysator (4) eine Auswerteeinheit (5) nachgeschaltet ist, in welcher zur Bestimmung der Konzentrationen des Gasgemisches die durch Fourieranalyse ermittelbaren Koeffizienten ($a_i$) des Signals s(t) der Wärmeleitfähigkeit mit durch Kallibriermessungen gewonnenen Werten vergleichbar sind.

**EP 1 222 454 B1**

**Claims**

1. A method of determining the gas concentrations in a gas mixture comprising more than one component, in which thermal conductivities of the gas mixture are determined at different temperatures, deriving therefrom the individual gas concentrations,
**characterized by** the steps of determining the thermal conductivities at a temperature level varying periodically as a function of time (T(t)) between a minimal and a maximal temperature value and determining continuously, as a function of time (t), the thermal conductivities (s(t)) obtained with the variation of temperature with time (T(t)),
and subjecting the time function of the thermal conductivity (s(t)) to a Fourier analysis and determining from the coefficients ($a_i$) of said Fourier analysis the concentrations of the gas components.

2. The method as claimed in claim 1, **characterized by** the step of determining the thermal conductivity (s(t)) with a harmonic variation of temperature with time (T(t)).

3. The method as claimed in claim 1 or 2, **characterized by** the step of subjecting a signal indicative of the thermal conductivity (s(t)) of the gas mixture to said Fourier analysis.

4. The method as claimed in any one of the preceding claims, **characterized by** the step of comparing the coefficients ($a_i$), obtained by the Fourier analysis, of the gas mixture to be determined with values obtained by a calibration process.

5. An apparatus for implementing the method of claim 1, with a sensor element for determining the thermal conductivity of a gas mixture adapted to be passed through the sensor and a device for subjecting the sensor element to predetermined temperature values, **characterized in that** said device for subjecting the sensor element (1) to predetermined temperature values is a temperature generator (3) adapted to act upon the sensor element (1) continuously with a periodic variation of temperature with time (T(t)), and that downstream of the sensor element (1) there is connected a Fourier analyzer (4) adapted to receive a sensor signal (s(t)) indicative of the thermal conductivity of the gas mixture (2) passed through said sensor.

6. The apparatus as claimed in claim 5, **characterized in that** the temperature generator (3) is operable to apply to the sensor element (1) a harmonic variation of temperature with time (T(t)).

7. The apparatus as claimed in claim 5 or 6, **characterized in that** downstream of the Fourier analyzer (4) is an evaluation unit (5) which enables the concentrations of the gas mixture to be determined by making a comparison between the coefficients ($a_i$) of the signal (s(t)) of the thermal conductivity obtainable by Fourier analysis and values obtained by a calibration process.

**Revendications**

1. Procédé pour la détermination des concentrations gazeuses dans un mélange gazeux ayant plus qu'un composant, dans lequel les conductivités thermiques du mélange gazeux sont déterminées à différentes température et les différentes concentrations gazeuses en sont déduites, **caractérisé en ce que**
les conductivités thermiques sont déterminées par une fonction température-temps (T(t)) s'étendant de façon périodique entre une valeur de température minimum et une valeur de température maximum, et les conductivités thermiques (s(t)) obtenues avec la courbe température-temps (T(t)) sont déterminées de façon continue en tant que fonction du temps (t),
et **en ce que** la fonction du temps de la conductivité thermique (s(t)) est soumise à une analyse de Fourier et les concentrations des composants gazeux est déterminée à partir des coefficients ($a_i$) de cette analyse de Fourier.

2. Procédé selon la revendication 1, **caractérisé en ce que** la conductivité thermique (s(t)) est déterminée par une courbe température-temps (T(t)) harmonique.

3. Procédé selon la revendication 1 ou 2, **caractérisé en ce qu'**un signal représentatif de la conductivité thermique (s(t)) du mélange gazeux est soumis à une analyse de Fourier.

4. Procédé selon l'une des revendications précédentes, **caractérisé en ce que** les coefficients (ai) du mélange gazeux à déterminer obtenus par l'analyse de Fourier sont comparés aux valeurs obtenues avec les mesures de calibrage.

**5.** Installation pour la mise en oeuvre du procédé selon la revendication 1, avec un détecteur pour la détermination de la conductivité thermique d'un mélange gazeux pouvant le traverser et un dispositif pour soumettre le détecteur aux valeurs de température prédéfinies, **caractérisée en ce que** le dispositif pour soumettre le détecteur aux valeurs de température prédéfinies est un générateur pour tempérer (3) avec lequel le détecteur (1) peut être soumis de façon continue à une fonction température-temps (T(t)) périodique, et **en ce que** le détecteur (1) est disposé en aval d'un analyseur de Fourier (4) auquel peut être envoyé un signal de détecteur (s(t)) représentatif de la conductivité thermique du mélange gazeux (2) le traversant.

**6.** Installation selon la revendication 5, **caractérisée en ce que** le détecteur (1) peut être soumis par le générateur pour tempérer (3) à une fonction température-temps (T(t)) harmonique.

**7.** Installation selon la revendication 5 ou 6, **caractérisée en ce que** l'analyseur de Fourier (4) est disposé en aval d'une unité d'exploitation (5) dans laquelle les coefficients ($a_i$) du signal (s(t)) de la conductivité thermiques pouvant être obtenus par analyse de Fourier peuvent être comparés à des valeurs obtenues par des mesures de calibrage.

$T(t)$

$s(t)$

$a_0$
$a_1$
$a_2$
$a_3$

<u>Fig. 1</u>

Fig. 2

**EP 1 222 454 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3711511 C1